# EUROPEAN PATENT APPLICATION

(11) **EP 4 836 591 A1**
(43) Date of publication of application: **04.11.2026**
(21) Application number: 25173918.1
(22) Date of filing: 02.05.2025
(51) Int. Cl.: H05B 47/11, H05B 47/115, H05B 47/12, H05B 47/13, H05B 47/175, H05B 47/195

(54) **ILLUMINATION SYSTEM**

(71) Applicant: Shenzhen Sunricher Technology Co., Ltd., Shenzhen, Guangdong 518000 (CN)
(72) Inventor: GONG, Fei, Shenzhen, 518000 (CN)
(74) Representative: MERH-IP Matias Erny Reichl Hoffmann Patentanwälte PartG mbB

(57) **Abstract**

An illumination system (10) is provided which includes: a lighting device (100), a sensing device (200) and a remote-control device (300). The sensing device (200) is connected to the lighting device (100) and is configured to control the lighting device (100) according to a sensing result. The remote-control device (300) includes a first infrared emitter module (310) and a laser emitter module (320). The first infrared emitter module (310) is configured to transmit an infrared remote-control signal, which is used to configure the sensing device (200). The laser emitter module (320) is configured to generate a positioning light spot, which is used to indicate a transmission direction of the infrared remote-control signal. The positioning light spot generated by the laser emitter module (320) indicates the transmission direction of the infrared remote-control signal, to improve the actual working efficiency of the remote-control device (300) according to the positioning light spot.

## Description

### TECHNICAL FIELD

The present application relates to the field of illumination technology, more particularly to an illumination system.

### BACKGROUND

The statements provided herein are merely background information related to the present application, and do not necessarily constitute any prior arts. At present, the existing illumination equipment can be directly configured with parameters at the installation site of the illumination equipment through a remote-control device. However, for illumination equipment that uses infrared for remote-control, when the distance between the illumination equipment and the remote-control device is too far, due to the limited emission angle of the infrared emitter, it is prone to occur that the remote-control device cannot accurately aim at the target illumination equipment, resulting in a decrease in the actual working efficiency of the remote-control device.

### SUMMARY

An aspect relates to an illumination system, aiming to solve the problem that the actual working efficiency of the traditional remote-control devices using infrared control is relatively low.

An embodiment of the present application provides an illumination system, which includes a lighting device, a sensing device and a remote-control device. The sensing device is connected to the lighting device, and the sensing device is configured to control the lighting device according to a sensing result. The remote-control device includes a first infrared emitter module and a laser emitter module. The first infrared emitter module is configured to transmit an infrared remote-control signal, the infrared remote-control signal is used to configure the sensing device. The laser emitter module is configured to generate a positioning light spot, and the positioning light spot is used to indicate a transmission direction of the infrared remote-control signal.

**In** one embodiment, the sensing device includes a first main control module, a first infrared receiver module, a sensor module and an illumination control module. The first infrared receiver module is connected to the first main control module. The first infrared receiver module is configured to receive the infrared remote-control signal, and output a first control signal corresponding to the infrared remote-control signal. The first control signal is used to configure the first main control module. The sensor module is connected to the first main control module, and the sensor module is configured to output the sensing result according to a sensing condition. The illumination control module is connected to the first main control module and the lighting device respectively. The first main control module is configured to control the lighting device through the illumination control module according to the sensing result.

**In** one embodiment, the sensing device also includes a second infrared emitter module, the remote-control device also includes a second infrared receiver module. The second infrared emitter module is connected to the first main control module, the first main control module is also configured to transmit an infrared feedback signal through the second infrared emitter module. The second infrared receiver module is configured to receive the infrared feedback signal.

**In** one embodiment, the remote-control device also includes a second main control module and a human-computer interaction module. The first infrared emitter module, the second infrared receiver module, the laser emitter module and the human-computer interaction module are all connected to the second main control module.

**In** one embodiment, the sensor module includes a human presence sensor. The human presence sensor is connected to the first main control module, and the human presence sensor is used to sense a human body within a detection range and output the sensing result. The first main control module is configured to control the lighting device to illuminate according to a preset illumination strategy when the human body is sensed by the human presence sensor.

**In** one embodiment, the preset illumination strategy includes that: the lighting device is controlled by the first main control module to illuminate at a first preset brightness, and after the lighting device has been illuminated for a first preset duration, the lighting device is controlled to illuminate for a second preset duration at a second preset brightness. The second preset brightness is lower than the first preset brightness.

**In** one embodiment, the sensor module includes an ambient light sensor which is connected to the first main control module. The ambient light sensor is used to detect a ambient light intensity and output the sensing result.

**In** one embodiment, the sensor module includes an acoustic sensor which is connected to the first main control module. The acoustic sensor is used to detect a sound intensity and output the sensing result.

**In** one embodiment, the sensing device also includes a communication module which is connected to the first main control module. The illumination system includes a plurality of lighting devices and a plurality of sensing devices, and the plurality of sensing devices are in communication with each other through their communication modules.

**In** one embodiment, each of the plurality of sensing devices is provided with a group parameter. The sensing device is also configured to send a second control signal to other sensing devices having a same group parameter when controlling the corresponding connected lighting device to illuminate according to the sensing result, and the second control signal includes the sensing result. The sensing device is also configured to control the lighting device according to the sensing result in the second control signal when receiving the second control signal sent by at least one of the other sensing devices.

**In** one embodiment, the sensing device is integrally configured with the lighting device.

Compared with the existing technologies, the embodiments of the present application have at least the following beneficial effect: the positioning light spot generated by the laser emitter module indicates the transmission direction of the infrared remote-control signal, to improve the actual working efficiency of the remote-control device according to the positioning light spot.

### BRIEF DESCRIPTION OF DRAWINGS

FIG. 1 is a schematic diagram of an illumination system provided by an embodiment of the present application;
FIG. 2 is a schematic diagram of a sensing device provided by an embodiment of the present application; and
FIG. 3 is a schematic diagram of a remote-control device provided by an embodiment of the present application.

### DETAILED DESCRIPTION OF EMBODIMENTS

In order to make the technical problems to be solved, the technical solutions and the beneficial effects of the present application clearer and more explicit, the following will further elaborate on the present application by combining with the drawings and the embodiments. It should be understood that the specific embodiments described herein are merely used to explain the present application and do not limit the present application.

It should be noted that when a component is referred to as "fixed to" or "arranged on" another component, it may be directly attached to the other component or indirectly attached to the other component. When a component is referred to as "connected to" another component, it may be directly connected to the other component or indirectly connected to the other component. In addition, for the sake of clarity, it is to be understood that the use of 'a' or 'an' throughout this application does not exclude a plurality, and 'comprising' does not exclude other steps or elements.

It should be understood that the terms "length", "width", "up", "down", "front", "back", "left", "right", "vertical", "horizontal", "top", "bottom", "inside", "outside", etc., which indicate positions or positional relationships, are based on the positions or positional relationships shown in the drawings, and are merely for the convenience of describing the present application and simplifying the description, rather than indicating or implying that the device or element referred to must have a specific orientation, be constructed and operated in a specific orientation, and therefore cannot be understood as a limitation on the present application.

**In** addition, the terms "first" and "second" are merely used for descriptive purposes, and should not be construed as indicating or implying relative importance or implicitly indicating the quantity of technical features indicated. Thus, the features limited by "first" and "second" may explicitly or implicitly include one or more of such features. **In** the description of the present application, the phrase "a/the plurality of" means two or more, unless otherwise clearly and specifically defined.

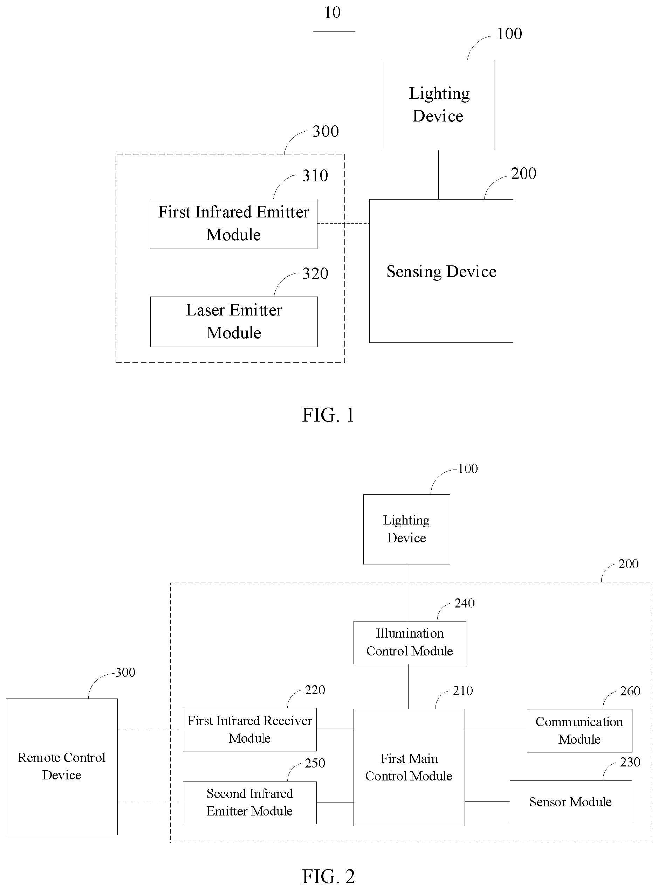

FIG. 1 shows a schematic diagram of an illumination system provided by an embodiment of the present application. For the sake of clarity, only the parts related to this embodiment are shown, which are described in detail as follows:
An illumination system 10 is provided which includes: a lighting device 100, a sensing device 200 and a remote-control device 300. The sensing device 200 is in connection with the lighting device 100, and the sensing device 200 is configured to control the lighting device 100 according to a sensing result. The remote-control device 300 includes a first infrared emitter module 310 and a laser emitter module 320. The first infrared emitter module 310 is configured to transmit an infrared remote-control signal, and the infrared remote-control signal is used to configure the sensing device 200. The laser emitter module 320 is configured to generate a positioning light spot, and the positioning light spot is used to indicate an infrared signal transmission direction of the first infrared emitter module 310.

The positioning light spot generated by the laser emitter module 320 indicates the transmission direction of the infrared remote-control signal, to improve the actual working efficiency of the remote-control device 300 according to the positioning light spot.

It can be understood that the infrared remote-control signal includes configuration information of the sensing device 200. The remote-control device 300 may directly transmit the infrared remote-control signal to the sensing device 200 to directly configure the sensing device 200, or transmit the infrared remote-control signal to the lighting device 100 to indirectly configure the sensing device 200 through the lighting device 100. In actual use, by observing the positioning light spot, it can be determined whether the transmission direction of the infrared remote-control signal is aimed at the target, thereby the actual working efficiency of the remote-control device 300 can be improved. The sensing device 200 may control the lighting device 100 to illuminate or control the lighting device 100 to stop illuminating according to the sensing result. The lighting device 100 may include an LED module or a luminous panel composed of LEDs.

Herein, the sensing device 200 may be configured with appropriate sensors according to actual requirements. In this embodiment, there is no limitation on the specific type and quantity of the sensors. According to the sensing signals generated and output from each sensor, the sensing result can be obtained.

In one embodiment, as shown in FIG. 2, the sensing device 200 includes a first main control module 210, a first infrared receiver module 220, a sensor module 230 and an illumination control module 240. The first infrared receiver module 220 is in connection with the first main control module 210. The first infrared receiver module 220 is configured to receive an infrared remote-control signal and output a first control signal corresponding to the infrared remote-control signal, and the first control signal is used to configure the first main control module 210. The sensor module 230 is in connection with the first main control module 210. The sensor module 230 is configured to output the sensing result according to a sensing condition. The illumination control module 240 is respectively connected to the first main control module 210 and the lighting device 100. The first main control module 210 is configured to control the lighting device 100 through the illumination control module 240 according to the sensing result.

Exemplarily, the first main control module 210 may include a main control chip. The first infrared receiver module 220 may include an infrared receiver circuit and an infrared receiver diode connected to the infrared receiver circuit, and the infrared receiver circuit may be connected to the first main control module 210. The illumination control module 240 may include a driver circuit corresponding to the lighting device 100. In some embodiments, the lighting device 100 includes an LED module, the illumination control module 240 may include an LED driver circuit, and the LED driver circuit may drive the LED module for illumination. The sensor module 230 may include one or more sensors, and a sensor of a suitable type may be selected according to actual requirements.

In some embodiments, the sensing device 200 also includes a power module, which may be connected to the first main control module 210, the first infrared receiver module 220, and the illumination control module 240, respectively, to provide a corresponding working voltage. The power module may be connected to an external power source. For instance, the power module may be connected to the power grid to obtain electrical energy.

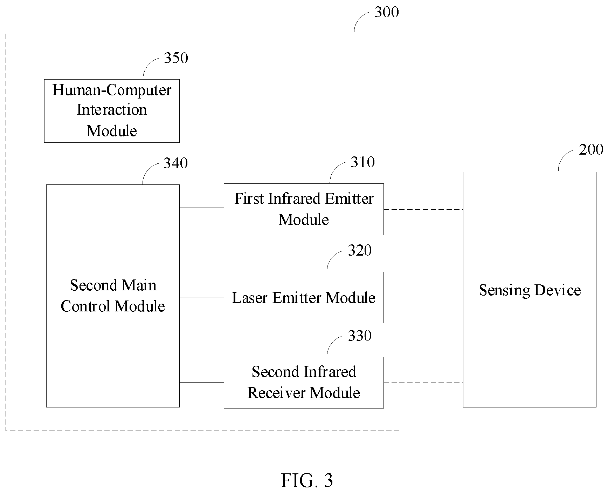

In one embodiment, as shown in FIG. 2 and FIG. 3, the sensing device 200 also includes a second infrared emitter module 250, and the remote-control device 300 also includes a second infrared receiver module 330. The second infrared emitter module 250 is in connection with the first main control module 210. The first main control module 210 is also configured to transmit an infrared feedback signal through the second infrared emitter module 250, and the second infrared receiver module 330 is configured to receive the infrared feedback signal.

The sensing device 200 may provide an infrared feedback signal to the remote-control device 300 through the second infrared emitter module 250. The infrared feedback signal may be set according to actual requirements. For instance, the infrared feedback signal may include data such as current configuration information of the sensing device 200, so that a user can obtain a working status of the sensing device 200 through the remote-control device 300. When the configuration of the sensing device 200 is carried out through the remote-control device 300, the infrared feedback signal may also be used to indicate that the sensing device 200 has completed the configuration.

In one embodiment, the remote-control device 300 also includes a second main control module 340 and a human-computer interaction module 350. The first infrared emitter module 310, the second infrared receiver module 330, the laser emitter module 320 and the human-computer interaction module 350 are all connected to the second main control module 340.

Herein, the human-computer interaction module 350 may include a touch screen, buttons, etc., to enable the user to set the configuration information provided to the sensing device 200 or obtain the current configuration information of the sensing device 200 through the human-computer interaction module 350.

Exemplarily, data such as configuration information may be displayed through a display or the touch screen, and data such as configuration information may be modified through the buttons.

**In** one embodiment, the sensor module 230 includes a human presence sensor. The human presence sensor is connected to the first main control module 210. The human presence sensor is configured to sense a human body within a detection range and output the sensing result.

Herein, the first main control module 210 is configured to control the lighting device 100 to illuminate according to a preset illumination strategy when a human body is sensed by the human presence sensor.

Through the human presence sensor, a human body appears within the detection range can be detected. When the sensing result output from the human presence sensor indicates that no human body appears within the detection range, then the first main control module 210 may determine that no human body appears within the detection range according to the sensing result. When the sensing result output from the human presence sensor indicates that a human body appears within the detection range, then the first main control module 210 may determine that a human body appears within the detection range according to the sensing result, thereby the lighting device 100 can be controlled according to the preset illumination strategy.

Herein, the preset illumination strategy may be set through an infrared remote-control signal. Exemplarily, the preset illumination strategy may be as follows: as long as a person appears within the detection range, the lighting device 100 should remain illuminated continuously. When no one appears within the detection range, the lighting device 100 should be immediately turned off or turned off after a certain delay.

Exemplarily, the human presence sensor may be at least one of an Infrared Sensor (IR), a Passive Infrared Radiation (PIR), and a microwave sensor.

In one embodiment, the preset illumination strategy includes that: the lighting device 100 is controlled by the first main control module 210 to illuminate at a first preset brightness, and after the lighting device 100 has illuminated for a first preset duration, the lighting device 100 is controlled to illuminate for a second preset duration at a second preset brightness; the second preset brightness is lower than the first preset brightness.

It should be noted that the preset illumination strategy is executed after detecting the onset of a human presence, it can be guaranteed that sufficient illumination will be provided when there is a person around, and even if the person has left the detection range, continuous lighting can also guarantee the lighting needs of the person. The segmented brightness variation can reduce a certain amount of power consumption and achieve the purpose of power saving.

It can be understood that the first preset brightness, the second preset brightness, the first preset duration and the second preset duration may all be set according to actual requirements through infrared remote-control signals, and the configuration information may include the first preset brightness, the second preset brightness, the first preset duration and the second preset duration.

Exemplarily, the first preset brightness may be the maximum brightness of the lighting device 100, the second preset brightness may be 30% of the maximum brightness of the lighting device 100, and the first preset duration and the second preset duration may both be 120 seconds.

In one embodiment, the sensor module 230 includes an ambient light sensor. The ambient light sensor is connected to the first main control module 210. The ambient light sensor is used to detect an ambient light intensity and output the sensing result.

The ambient light intensity is detected by the ambient light sensor. The sensing device 200 may automatically control the lighting device 100 to illuminate when the ambient light intensity is low.

Exemplarily, the first main control module 210 may determine the ambient light intensity according to the sensing result output from the ambient light sensor, and control the lighting device 100 to illuminate when the ambient light intensity is lower than a preset illumination threshold.

**In** one embodiment, the sensor module 230 includes an acoustic sensor. The acoustic sensor is connected to the first main control module 210, and the acoustic sensor is used to detect a sound intensity and output the sensing result.

The sound intensity of the received sound is detected by the acoustic sensor, and the sensing device 200 may automatically control the lighting device 100 to illuminate when the sound intensity is high.

Exemplarily, the first main control module 210 may determine the sound intensity of the received sound according to the sensing result output from the acoustic sensor, and control the lighting device 100 to illuminate when the sound intensity is higher than a preset volume threshold.

**In** one embodiment, the sensing device 200 also includes a communication module 260. The communication module is connected to the first main control module 210. The illumination system 10 includes a plurality of lighting devices 100 and a plurality of sensing devices 200, and the plurality of sensing device 200 is in communication with each other through their communication modules 260.

By enabling inter-communication among multiple sensing devices 200, these sensing devices can operate in a coordinated manner. This allows a single sensing device 200 to simultaneously control multiple lighting devices 100 through the interconnected sensing device network.

It should be noted that the plurality of lighting devices 100 are usually arranged at different locations to ensure the coverage area of lighting. Meanwhile, the plurality of sensing devices 200 are also required to be respectively responsible for different areas. One sensing device 200 may be connected to at least one lighting device. According to operational requirements, some of the sensing devices 200 may be selected to establish interconnections through their communication modules 260, thereby achieving coordinated control of the plurality of lighting devices 100.

When multiple sensing devices 200 are closely spaced, the laser emitter module 320 enables precise control over the transmission direction of infrared remote-control signals, thereby preventing misconfiguration of the sensing devices.

Exemplarily, the communication module may include a Sub-GHz (LoRa) wireless communication chip.

**In** some embodiments, some of the sensing devices 200 may also be used as relay devices to connect sensing devices 200 at a long distance, thereby enabling long-distance signal transmission between sensing devices 200 and achieving long-distance synchronous control of the plurality of sensing devices 200.

**In** one embodiment, each sensing device 200 is provided with a group parameter. The sensing device 200 is also configured to send a second control signal to other sensing devices 200 having the same group parameter when controlling the corresponding connected lighting device 100 to illuminate according to the sensing result, and the second control signal includes the sensing result. The sensing device 200 is also configured to, when receiving the second control signal sent by other sensing devices 200, control the lighting device 100 according to the sensing result in the second control signal.

It can be understood that the group parameter may be configured through infrared remote-control signals.

By configuring group parameters of individual sensing devices 200, post-installation network configuration may be carried out on-site according to the actual physical positions of both lighting devices 100 and sensing devices 200. This field-programmable networking enables synchronized grouping of the lighting devices 100 through their associated sensing nodes.

**In** one embodiment, the sensing device 200 is integrally configured with the lighting device 100.

By integrating the sensing device 200 with the lighting device 100, it is convenient for the installation and connection of the sensing device 200 and the lighting device 100. Meanwhile, the corresponding sensing device 200 can be quickly located through the lighting device 100, thereby improving the configuration efficiency of the remote-control device 300 for the sensing device 200 and enhancing the user experience of the illumination system 10.

Persons skilled in the related art can clearly understand that for the sake of convenience and simplicity in description, only the above-mentioned division of functional units and modules is given as an example. **In** practical applications, the aforementioned functions may be assigned to different functional units or modules as needed. That is to say, the internal structure of the device may be divided into different functional units or modules to complete all or part of the functions described above. **In** the embodiments, each functional unit or module may be integrated into a single processing unit, or exist physically separately, or two or more units may be integrated into one unit. The integrated units may be implemented either in the form of hardware or in the form of software functional units. Furthermore, the specific names of each functional unit and module are merely for the purpose of facilitating mutual distinction and are not intended to limit the protection scope of this application. The specific working processes of the units and modules in the aforementioned system may be referred to the corresponding processes in the aforementioned method embodiments, which will not be elaborated on here.

**In** the above embodiments, the description of each embodiment has its own emphasis. For the part that is not described or recorded in a certain embodiment, references may be made to the relevant description of other embodiments.

The above-mentioned embodiments merely serve to illustrate the technical solution of the present application, rather than to limit the present application. Although the present application has been elaborately described with reference to the aforementioned embodiments, it should be understood by the ordinary skilled person in the art that they can still modify the technical solutions recorded in the aforementioned embodiments, or make equivalent substitutions for some of the technical features in these embodiments. These modifications or substitutions do not cause the essence of the corresponding technical solutions to deviate from the spirit and scope of the technical solutions of each of the embodiments of the present application, and thus should all be included within the protection scope of the present application.

## Claims

1. An illumination system (10), comprising:
a lighting device (100);
a sensing device (200), connected to the lighting device (100), and configured to control the lighting device (100) according to a sensing result; and
a remote-control device (300), comprising:
a first infrared emitter module (310), configured to transmit an infrared remote-control signal, the infrared remote-control signal being used to configure the sensing device (200); and
a laser emitter module (320), configured to generate a positioning light spot, the positioning light spot being used to indicate a transmission direction of the infrared remote-control signal.

2. The illumination system (10) according to claim 1, wherein the sensing device (200) comprises a first main control module (210), a first infrared receiver module (220), a sensor module (230) and an illumination control module (240);
the first infrared receiver module (220) is connected to the first main control module (210), the first infrared receiver module (220) is configured to receive the infrared remote-control signal, and output a first control signal corresponding to the infrared remote-control signal, and the first control signal is used to configure the first main control module (210);
the sensor module (230) is connected to the first main control module (210), and the sensor module (230) is configured to output the sensing result according to a sensing condition; and
the illumination control module (240) is connected to the first main control module (210) and the lighting device (100) respectively, and the first main control module (210) is configured to control the lighting device (100) through the illumination control module (240) according to the sensing result.

3. The illumination system (10) according to claim 2, wherein the sensing device (200) further comprises a second infrared emitter module (250), and the remote-control device (300) further comprises a second infrared receiver module (330),
the second infrared emitter module (250) is connected to the first main control module (210), the first main control module (210) is further configured to transmit an infrared feedback signal through the second infrared emitter module (250), and
the second infrared receiver module (330) is configured to receive the infrared feedback signal.

4. The illumination system (10) according to claim 3, wherein the remote-control device (300) further comprises a second main control module (340) and a human-computer interaction module (350), and the first infrared emitter module (310), the second infrared receiver module (330), the laser emitter module (320) and the human-computer interaction module (350) are all connected to the second main control module (340).

5. The illumination system (10) according to any one of claims 2 to 4, wherein the sensor module (230) comprises a human presence sensor, the human presence sensor is connected to the first main control module (210), and the human presence sensor is used to sense a human body within a detection range and output the sensing result; and
the first main control module (210) is configured to control the lighting device (100) to illuminate according to a preset illumination strategy when the human body is sensed by the human presence sensor.

6. The illumination system (10) according to claim 5, wherein the preset illumination strategy comprises:
the lighting device (100) is controlled by the first main control module (210) to illuminate at a first preset brightness, and after the lighting device (100) has been illuminated for a first preset duration, the lighting device (100) is controlled to illuminate for a second preset duration at a second preset brightness; and
the second preset brightness is lower than the first preset brightness.

7. The illumination system (10) according to any one of claims 2 to 4, wherein the sensor module (230) comprises an ambient light sensor, the ambient light sensor is connected to the first main control module (210), and the ambient light sensor is used to detect an ambient light intensity and output the sensing result.

8. The illumination system (10) according to any one of claims 2 to 4, wherein the sensor module (230) comprises an acoustic sensor, the acoustic sensor is connected to the first main control module (210), and the acoustic sensor is used to detect a sound intensity and output the sensing result.

9. The illumination system (10) according to any one of claims 2 to 4, wherein the sensing device (200) further comprises a communication module (260), the communication module (260) is connected to the first main control module (210); and the illumination system (10) comprises a plurality of lighting devices (100) and a plurality of sensing devices (200), and the plurality of sensing devices (200) are in communication with each other through their communication modules (260).

10. The illumination system (10) according to claim 9, wherein each of the plurality of sensing devices (200) is provided with a group parameter;
the sensing device (200) is further configured to send a second control signal to other sensing devices (200) having a same group parameter when controlling a corresponding connected lighting device (100) to illuminate according to the sensing result, and the second control signal comprises the sensing result; and
the sensing device (200) is further configured to control the corresponding connected lighting device (100) according to the sensing result in the second control signal when receiving the second control signal sent by at least one of the other sensing devices (200).

11. The illumination system (10) according to any one of claims 2 to 4, wherein the sensing device (200) is integrally configured with the lighting device (100).
